(19) Europäisches Patentamt

European Patent Office

Office européen des brevets

(11) Veröffentlichungsnummer: **0 277 622 B1**

(12) # EUROPÄISCHE PATENTSCHRIFT

(45) Veröffentlichungstag der Patentschrift: **06.05.92**

(21) Anmeldenummer: **88101412.0**

(22) Anmeldetag: **01.02.88**

(51) Int. Cl.5: **A61C 8/00**, A61C 5/04, A61C 13/30

(54) **Stomatologisches Implantat.**

(30) Priorität: **02.02.87 DD 299621**

(43) Veröffentlichungstag der Anmeldung:
**10.08.88 Patentblatt 88/32**

(45) Bekanntmachung des Hinweises auf die
Patenterteilung:
**06.05.92 Patentblatt 92/19**

(84) Benannte Vertragsstaaten:
**AT CH DE GB IT LI**

(56) Entgegenhaltungen:
**CH-A- 424 086**
**DE-A- 2 632 932**
**DE-A- 2 936 690**
**DE-A- 3 222 616**
**DE-A- 3 316 785**

(73) Patentinhaber: **AHC-Oberflächentechnik Friebe & Reininghaus GmbH
Boelckestrasse 33-57
W-5014 Kerpen/Erft(DE)**

(72) Erfinder: **Kurze, Peter, Doz.Dr.sc.nat.
Haupstrasse 48
O-9109 Oberlichtenau(DE)**

Erfinder: **Rabending, Klaus, Dr.rer.nat.
Arthur-Beil-Strasse 44
O-9115 Taura(DE)**
Erfinder: **Krysmann, Waldemar, Dr.rer.nat.
Fritz-Schmenkel-Strasse 37
O-9071 Karl-Marx-Stadt(DE)**
Erfinder: **Löwicke, Gerold, Prof.Dr.sc.med.
Lowetscher Strasse 15
O-5062 Erfurt(DE)**
Erfinder: **Knöfler, Wolfram, Dr. sc. med.
Kantstrasse 34
O-7030 Leipzig(DE)**
Erfinder: **Graf, Hans-Ludwig, Dr. med.
Volksgartenstrasse 26
O-7024 Leipzig(DE)**

(74) Vertreter: **Spott, Gottfried, Dr. et al
Spott Weinmiller & Partner Sendlinger-
Tor-Platz 11
W-8000 München 2(DE)**

EP 0 277 622 B1

## Beschreibung

Die Erfindung betrifft ein stomatologisches Implantat aus Titanium, Tantal, Niobium, Zirkonium und/oder deren Legierungen und seine Verwendung für Wurzelfüllstifte, Replantationsstifte und Transfixationsstifte.

Es ist bekannt, Wurzelkanalstifte aus Ti, Ta, U.a. in der Stomatologie bei Wurzelbehandlungen und Transfixationen, Wurzelspitzenresektionen anzuwenden. Dabei wird der Wurzelkanal formgerecht ausgearbeitet und der Wurzelkanalstift unter Verwendung eines mehr oder minder kompatiblen aushärtenden Füllstoffes (Zemente, Epoxidharze) eingesetzt, wie es beispielsweise dem Firmenprospekt der Firma Institut Straumann AG, Ch-4437 Waldenburg, "Apikaler Wurzelkanalstif aus Titan" zu entnehmen ist.

Trotz dieser seit Jahren verwendeten Technik in der Stomatologie, ist das Entstehen von Mikrospalten zwischen Wurzelkanalstift und Zahnsubstanz infolge unvollständiger Ausfüllung bzw. Auswaschung des als Abdichtmasse dienenden Wurzelfüllmaterials nicht zu verhindern (Deutsche Zahnärztliche Zeitschrift 42 (1987), S. 262-264; 277-282). Füllstof fen, denen eine Unlöslichkeit zugeschrieben wird, sind andererseits wenig osteokompatibel. Infolgedessen treten die bekannten Komplikationen auf, die letztlich zum Verlust des Zahnes führen.

Aus DE-OS 29 36 690 ist ein endodontisch prothetisches Stabilisierungssystem für Zahnersatz bekannt, das aus einem Schaft, der zur Implantation durch den Wurzelkanal ausgebildet ist, und einem Kronenteil zur Halterung der Zahnkrone besteht. Der Schaft, der gewindefrei und sich verjüngend ist, wird in den Wurzelkanal eingesetzt, wobei sich jedoch wie bei den bekannten Wurzelkanalstiften Mikrospalten zwischen Wurzelkanalstift und Zahnsubstanz bilden können. Weiterhin ist aus DE-OS 26 32 932 ein Zahnimplantat bekannt, das aus einem Grundkörper und einer darauf aufgebrachten Oberflächenschicht besteht. Die Oberflächenschicht, die ein Oxid, Nitrid, Karbid oder Karbonnitrid sein kann, soll so ausgebildet sein, daß das Entstehen eines Abriebs verhindert wird. Auch mit diesem Implantat konnten die bestehenden Probleme nicht vollständig gelöst werden. Auch in CH-PS 424 086 wird ein Zahnimplantat beschrieben, das einen teilweise sich verjüngenden Schaft aufweist. Auch mit dieser Vorrichtung ist eine vollständige Abdichtung des Wurzelkanals nicht möglich.

Der Erfindung liegt die Aufgabe zugrunde, einen Wurzelkanalstift zu schaffen, dessen Oberfläche den vom Implantat zu erfüllenden Funktionen:
- langfristiger, bakteriendichter Verschluß des Wurzelkanals, ohne zusätzliche Dichtstoffe
- Osteokompatibilität
entsprechend adaptiert ist.

Diese Aufgabe wird gelöst durch ein stomatologisches Implantat, das dadurch gekennzeichnet ist, daS es einen im Wurzelkanal fest zu verankernden Kegelstumpf, dessen Oberfläche mit einer biokompatiblen, gegenüber der Apikalregion weicheren, ANOF-Schicht bis 40 $\mu$m belegt ist, umfaßt.

Es wurde gefunden, daS bei dem erfindungsgemäßen stomatologischen Implantat ein Dichtefekt entsteht, da die ANOF-Schicht beim Eindringen in den aufbereiteten Wurzelkanal abgerieben wird und dadurch den Wurzelkanal abdichtet. Dieses stomatologische Implantat kann als Wurzelfüllstift verwendet werden.

In einer weiteren Ausführungsform der Erfindung umfaßt das stomatologische Implantat zusätzlich eine gewindetragende, an den Kegelstumpf anschließende Zone 11, die einen zylindrischen Teil umfaßt, dessen Oberfläche mit einer gegenüber der biologischen Umgebung härteren, nicht abreibbaren ANOF-Schicht bis 10 $\mu$m Dicke belegt ist. Diese nicht abreibbare ANOF-Schicht enthält Osteogenese stimulierende Calcium- und Phosphationen bis zu 40 %.

Diese Ausführungsform des stomatologischen Implantats ist insbesondere geeignet zur Verwendung als Replantationsstift.

In einer alternativen Ausführungsform der Erfindung umfaßt das stomatologische Implantat zusätzlich zu den Zonen I und II noch eine aus einem spitzförmigen Teil bestehende Zone III, die an die gewindetragende Zone II anschließt und deren Oberfläche mit einer biokompatiblen Oxid- und/oder Nitrid-und/oder Carbidschicht bis 5 $\mu$m belegt ist. Dieser als Zone III bezeichnete Teil des Implantats übernimmt beim Implantieren die Funktion eines Bohrers. Das Implantat, das alle drei beschriebenen Zonen umfaßt, ist inbesondere geeignet als Transfixationsstift.

Nach formgerechter Ausarbeitung des Wurzelkanals wird der Wurzelkanalstift ohne Füllmaterial in bekannter Weise eingeschraubt. Beim Einarbeiten der Zone III und II in den Kiefer-Knochen, ist auf Grund des erfindungsgemäßen Aufbaues der einzelnen Zonen zwischen Implantat und Knochen kein Abrieb zu verzeichnen, und das Einheilen in die Knochensubstanz wird infolge des Kalzium- und Phosphatgehaltes der Zone II günstig beeinflußt.

Die durch die Erfindung erreichten Vorteile sind im wesentlichen darin zu sehen, daß diese Implantate einen langfristig bakteriendichten Verschluß des Wurzelkanals ohne zusätzliche Dichtstoffe garantieren.

Im folgenden wird die Erfindung an zwei Ausführungsbeispielen näher erläutert.

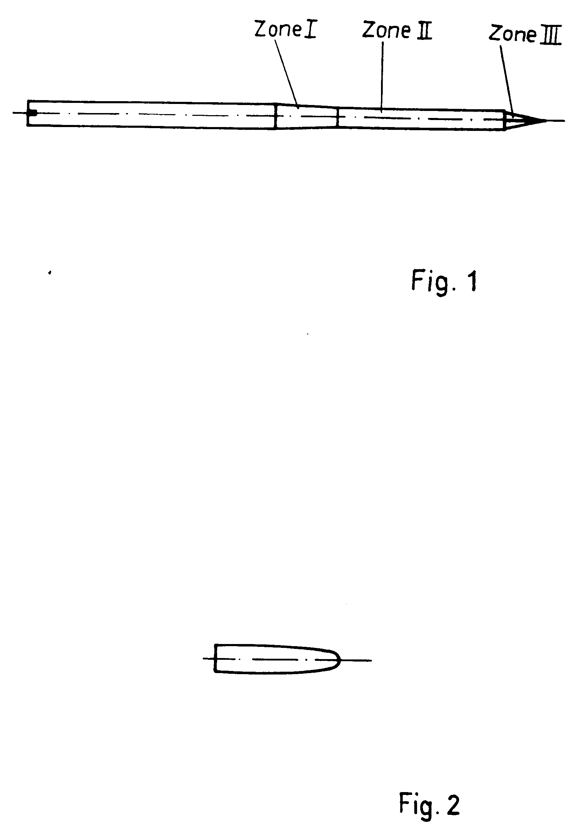

Figur 1 stellt einen Transfixationsstift aus EMO-Titan 110 mit einer Gesamtlänge von 25 mm, dessen Zone I als Kegelstumpf mit den Maßen (Durchmesser $d_1$ = 1,2 mm, $d_2$ = 1,0 mm und Höhe h = 3 mm) dar, der mit einer ANOF-Schicht, die in einen Elektrolyten der Zusammensetzung (0,5 mol/l NaF, 0,5 mol/l $NaH_2PO_4$, 0,1 mol/l $Na_2B_4O_7$, 0,1 mol/l $NH_4F$) bis zu einer Stärke von 25 $\mu$m erzeugt wird, beschichtet ist. Die gewindetragende zylindrische Zone II hat einen Durchmesser von 1,0 mm und eine Länge von 8 mm und ist mit einer 8 $\mu$m dicken ANOF-Schicht, gebildet in einem wäßrigen, gesättigten $Ca(H_2PO_4)_2$ Elektrolyten, belegt.
Der Kalziumphosphatgehalt an der Schichtoberfläche beträgt 30%.
Die Zone III ist spitzförmig mit einem Basisdurchmesser von 0,8 mm und einer Höhe von 2,0 mm, deren Oberfläche mit einer 2 $\mu$m starken Titanoxidschicht belegt ist. Der medizinische Vorteil besteht darin, daß durch die abreibbaren Titanoxidpartikel der Zone I die Rauhigkeiten der Wurzelkanaloberfläche verschlossen werden und damit ein langzeitstabiler bakteriendichter Verschluß erreicht wird.

Figur 2 stellt einen projektilförmigen Kurzstift von 6 mm Länge, einem Basisdurchmesser von 1,2 mm und einem parabolischen Längsschnitt dar, der mit einer ANOF-Schicht, die aus einem Elektrolyten der Zusammensetzung 0,5 mol/l NaF, 0,5 mol/l $NaH_2PO_4$, 0,1 mol/l $Na_2B_4O_7$ und 0,1 mol/l $NH_4F$ bis zu einer Stärke von 25 $\mu$m erzeugt wird, beschichtet ist. Dieser Stift wird nach erfolgter Wurzelspitzenresektion und formgerechter Wurzelkanalaufbereitung zementfrei eingesetzt.

**Patentansprüche**

1. Stomatologisches Implantat aus Titanium, Tantal, Niobium, Zirkonium und/oder deren Legierungen, dadurch gekennzeichnet, daß es einen im Wurzelkanal fest zu verankernden Kegelstumpf, dessen Oberfläche mit einer biokompatiblen, gegenüber der Apikalregion weicheren, ANOF-Schicht bis 40 $\mu$m belegt ist, umfaßt.

2. Stomatologisches Implantat nach Anspruch 1, dadurch gekennzeichnet, daß das Implantat zusätzlich eine gewindetragende, an den Kegelstumpf anschließende, Zone II aus einem zylindrischen Teil umfaßt, dessen Oberfläche mit einer gegenüber der biologischen Umgebung härteren, nicht abreibbaren ANOF-Schicht bis 10 $\mu$m Dicke belegt ist.

3. Stomatologisches Implantat nach Anspruch 2, dadurch gekennzeichnet, daß es zusätzlich eine aus einem spitzförmigen Teil bestehende Zone III, die an die gewindetragende Zone II anschließt, umfaßt, deren Oberfläche mit einer biokompatiblen Oxid- und/oder Nitrid- und/oder Carbidschicht bis 5 $\mu$m belegt ist.

4. Verwendung des stomatologischen Implantats nach Anspruch 1 als Wurzelfüllstift.

5. Verwendung des stomatologischen Implantats nach Anspruch 2 als Replantationsstift.

6. Verwendung des stomatologischen Implantats nach Anspruch 3 als Transfixationsstift.

**Claims**

1. A stomatological implant consisting of titanium, tantalum, niobium and/or their alloys, characterised in that it comprises a frustum adapted to be rigidly anchored in the root canal and in that its surface is coated with a biocompatible ANOF layer of up to 40 $\mu$m thickness which is softer than the apical region.

2. A stomatological implant according to Claim 1, characterised in that the implant additionally comprises, adjacent the frustum, a zone II which carries a screwthread and consists of a cylindrical part the surface of which is coated with a non-abradable ANOF layer up to 10 $\mu$m thick and harder than the biological environment.

3. A stomatological implant according to Claim 2, characterised in that it additionally comprises a zone III consisting of a pointed part and situated adjacent the screwthreaded zone II and the surface of which is coated with a biocompatible oxide and/or nitride and/or carbide layer up to 5 $\mu$m thick.

4. Use of the stomatological implant according to Claim 1 as a root-filling stick.

5. Use of the stomatological implant according to Claim 2 as a replant stick.

6. Use of the stomatological implant according to Claim 3 as a transfixation stick.

**Revendications**

1. Implant stomatologique en titane, tantale, niobium, zirconium et/ou leurs alliages, caractérisé en ce qu'il comporte Un cône tronqué à ancrer fermement dans le canal radiculaire et dont la surface est revêtue d'une couche biocompatible, déposée par anodisation ou décharge par étincelle, d'un maximum de 40 μm, plus tendre que la région apicale.

2. Implant stomatologique selon la revendication 1, caractérisé en ce qu'il comporte en Outre une zone II filetée faisant suite au cône tronqué, composée d'une partie cylindrique dont la surface est revêtue d'une couche déposée par anodisation ou décharge par étincelle, d'un maximum de 10 μm d'épaisseur, plus dure que l'environnement biologique et qui ne peut être usée par abrasion.

3. Implant stomatologique selon la revendication 2, caractérisé en ce qu'il comprend en outre une zone III faisant suite à la zone filetée II, composée d'une partie effilée dont la surface est revêtue d'une couche biocompatible d'oxyde et/ou de nitrure et/ou de carbure, d'un maximum de 5 μm.

4. Emploi de l'implant stomatologique selon la revendication 1, comme tenon d'obturation radiculaire.

5. Emploi de l'implant stomatologique selon la revendication 2, comme tenon de réimplantation.

6. Emploi de l'implant stomatologique selon la revendication 3 comme tenon de transfixation.

Zone I    Zone II    Zone III

Fig. 1

Fig. 2